# EUROPEAN PATENT APPLICATION

(11) **EP 1 112 946 A1**
(43) Date of publication of application: **04.07.2001**
(21) Application number: 99830807.6
(22) Date of filing: 28.12.1999
(51) Int. Cl.: B65D 81/38, A47G 23/06

(54) **Thermal container for transporting pre-cooked foods and container assembly**

(71) Applicant: Novidea SRL, 20145 Milano (IT)
(72) Inventor: Ghirardi, Marco, 27028 S. Martino Siccomario (PV) (IT)
(74) Representative: Petruzziello, Aldo

(57) **Abstract**

A thermal container for transporting pre-cooked foods comprising an external shell or actual container (1) composed of a base (2; 102) and a lid (3; 102), both thermally insulating and provided with alignment means (5, 6; 5, 106) for self-centring the lid on the base, having between the base (2; 102) and the lid (3; 102) a plate (12) removably positioned for holding the pre-cooked foods, the shell (1) being of washable material so that it may be reused and the plate (12) being of disposable material so that it may be eliminated after use.

## Description

This invention refers to a thermal container for transporting pre-cooked foods (catering) for individual and/or community use, and to an assembly of such containers, in which a disposable plate-container is inserted.

The practice of delivering pre-cooked foodstuffs to home and/or in a community environment such as hotels, restaurants, canteens, hospitals, etc., is becoming increasingly important in daily life. This solution offers a valid alternative in terms of practicality and economy in comparison with meals conveniently prepared and consumed on the premises, which require care and attention for their preparation, in many cases offering advantages in terms of quality, satisfaction and cost.

Unfortunately, in the majority of cases, practicality and economy do not go hand in hand with the respect of the quality of the food which is to be consumed some time after being prepared. Foods are often transported in containers with properties that are not compatible with preserving the quality of the foods. These known containers have various drawbacks. They have a high heat loss and are therefore unable to maintain the temperature of the food inside, they do not respect suitable hygiene standards, they are not practical, are made of materials that are difficult to recycle, and their appearance does not have a pleasant impact.

In the current technique, many suitable containers are now being made to facilitate the transport of pre-cooked foods. For example, the most widespread ones are cardboard boxes, thermoformed plates of plastic material, thermal containers made of polystyrene foam.

Depending on the case, each of the aforementioned embodiments possesses characteristics aimed at improving the practicality of transport, the thermal seal of the container, the ease of disposal of the container as waste after use, the simplicity and low cost of producing the container.

The cardboard box represents a good compromise as regards the weight to be transported, but it is completely insufficient from the point of view of hygiene and environmental impact. The food remains in contact with the cardboard which has not been hygienically safeguarded during production. Being disposable, the cardboard container implies the creation and accumulation of bulky waste, which is troublesome and costly to dispose of.

Polystyrene foam containers supply excellent thermal performance, but they are expensive and are difficult to dispose of, being made of non recyclable material.

Thermoplastic plates, obtained by thermoforming, have excellent possibilities for recovery after use and allow a good level of hygiene, but they do not keep the food hot and are not practical for transport.

The aim of this invention is to eliminate these drawbacks by providing a container for the transport of pre-cooked foods which is both hygienic and able to keep the food at the correct temperature.

Another aim of this invention is to provide such a container which is practical for transport, economic and simple to make.

Another aim of this invention is to provide such a container which is easy to dispose of, which does not have a bad environmental impact.

Another aim of this invention is to provide such a container which is suitable for forming an assembly of containers, stacked one on top of another.

These aims are achieved, according to the invention, with the characteristics listed in the enclosed independent claim 1.

Preferred embodiments of the invention are given in the dependent claims.

According to the invention, the thermal container for transporting pre-cooked foods comprises an external shell, or actual container, composed of two semi-shells which act as base and lid. The base and the lid sealingly close together, enclosing a plate, preferably thermoformed, which can be removed, on which the food that is to be transported is placed.

The plate is shaped in such a way as to minimise heat loss from the food that it contains. This plate may include a base coupled to a lid so as to form a closed wrapper containing the food which is placed inside the container.

The plate also has a flap protruding from the edge of the outer shell so that it may be gripped by the user in order to extract it from the container when taking out the food.

The plate is preferably made of disposable material so that the consumer can eliminate it after use. Instead, the shell is conveniently of a reusable type, so that it may be washed and used again for transport. For this purpose the shell is made of suitable material to resist washing in industrial dishwashing machines.

According to the invention, the container may be stacked and assembled in a number of elements by means of special abutment or alignment means. In this way it is possible to stack the containers one on top of the other to form a stack of containers which may be transported occupying minimum bulk.

It appears clear that the container, according to the invention, fully satisfies the set aims. It is specially shaped in order to minimise heat loss and is made of a material that allows it to be washed and used again afterwards. The plate inside it, on the other hand, which contains the foodstuffs, is made of disposable material that may be eliminated and recycled after use.

Further characteristics of the invention will appear more clearly from the detailed description which follows, referring to exemplary unrestructive embodiments thereof, illustrated in the enclosed drawings, in which:
Fig. 1 is a part- sectional front view of the container according to the invention;
Fig. 2 is a view of an enlarged detail of Fig. 1;
Fig. 3 is a front view, showing an assembly of stacked containers, according to a second embodiment of the invention;
Fig. 3a shows an enlarged detail of Fig. 3.

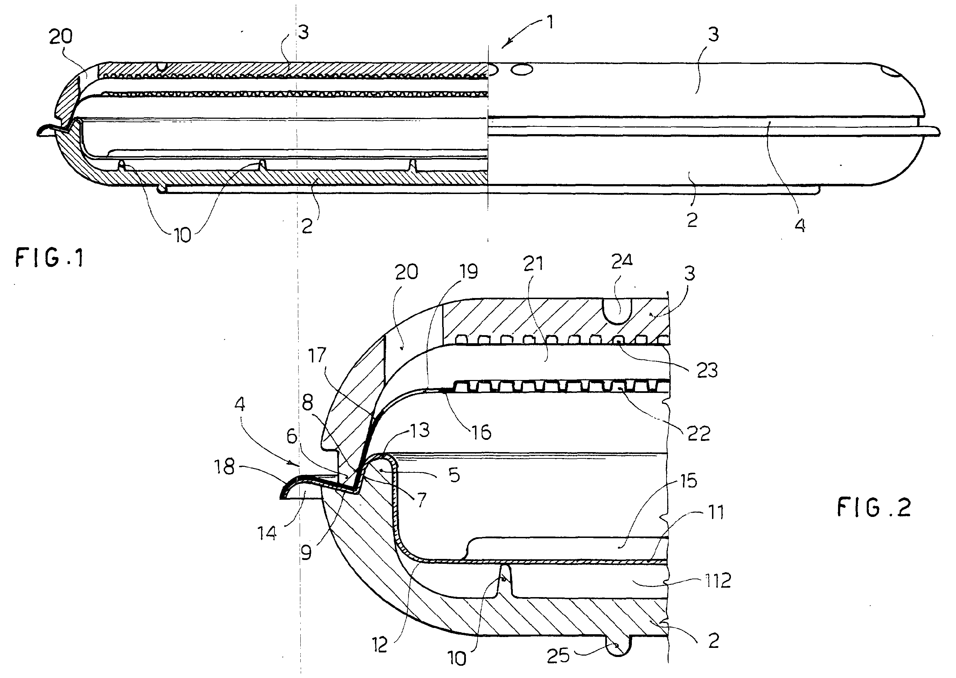

With the aid of Fig. 1 and 2, a thermal container is described for transporting pre-cooked foods, according to a first embodiment of the invention.

According to the invention, the container substantially comprises an external shell, the actual container, the whole of which is indicated with the reference number 1, and an internal plate 12 which holds the food.

The shell 1 is substantially disc-shaped with rounded edges, though it may be realised in other shapes; it is hollow on the inside and is composed of two semi-shells which act as the base 2 and lid 3. The lid 3 may be fitted on top of the base 2, so as to leave a circumferential groove 4, in a central position as regards the height of the container, allowing easy lifting of the lid 3.

Within the groove 4, the base 2 and the lid 3 have respective annular projecting parts 5 and 6 with respective matching tapered surfaces 7 and 8, which form a simple and effective closure with automatic centring of the lid on the base.

The base 2 has an edge 9, outside the projecting part 5, forming a counterslope.

The internal surface of the base 2 has ribbing or ridges 10 projecting upward. The base 11 of the plate 12 that is to contain the food is positioned on these ribs 10. In this way there remains an air gap 112 between the base 11 of the plate and the base 2 of the container shell 1 to minimise heat loss between the plate 12 and the shell 1.

The base 11 of the plate 12 has an edge 13 which follows the line of the projecting part 5 and of the edge 9 of the base 2 of the shell, ending in a flap 14 which projects outside the shell 1. The flap 14 can thus be gripped by the user in order to lift the plate 12 to remove it from the shell 1.

The internal surface of the base 11 of the plate has ridges or ribbing 15 which create a large area of separation under the food that lies on top thereof. This arrangement allows the creation of a ventilating effect under the food, preventing the formation of condensate.

On the plate 12 there is a lid 16 with an edge 17 shaped like the projecting part 6 of the lid 3 of the container shell 1 and ending in a flap 18 which projects outside and overlaps the flap 14 of the base 11 of the plate. The edge 17 of the lid of the plate comes in intimate close contact with the edge 13 of the base of the plate, so that the plate 12 containing the food is perfectly closed by the lid 16.

The edges 13 and 17, of the base and of the plate lid respectively, are sandwiched between surfaces 7 and 8 of the projecting parts 5 and 6, respectively of the base 2 and of the lid 3 of the external shell 1. In this way the shell 1, containing the plate 12, remains perfectly closed without any possibility of radial movements between the base 2 and the lid 3.

The lid 16 of the plate 12 has, preferably on its peripheral part, a plurality of holes or slots 19, which in combination with corresponding holes or slots 20 in the lid 3 of the external shell 1, allow the water vapour released by the food to be discharged outside. The top of the lid 16 of the plate and the top of the lid 3 of the external shell 1, separated by a gap 21, are marked with the respective grooves 22 and 23 which minimise the formation of condensate.

To allow stacking of several containers, on the extrados of the lid 3 of each shell there is a circular groove 24, while on the extrados of the base 2 there is a corresponding circular ridge 25, with dimensions enabling it to fit into the grove 24, so that the containers fit easily together.

The elements that make up the shell 1, that is the base 2 and the lid 3, may be made of moulded plastic material or by means of casting or cold or hot mechanical deformation of metal. As regards metals, non ferrous metals are preferable, for example aluminium.

The base 2 and the lid 3 must have a rigid wall, however they may be made with a different material density between the internal face and the external face in order to obtain an increase of insulation performance. In the body of the base 2 and/or of the lid 3 there may also be chambers which are filled with air or another gas or materials, such as polyurethane foam, which improve the thermal seal performance.

Also with the aim of a better thermal seal, on the surfaces of the container 1 there may be suitable coverings such as reflecting films or special paints.

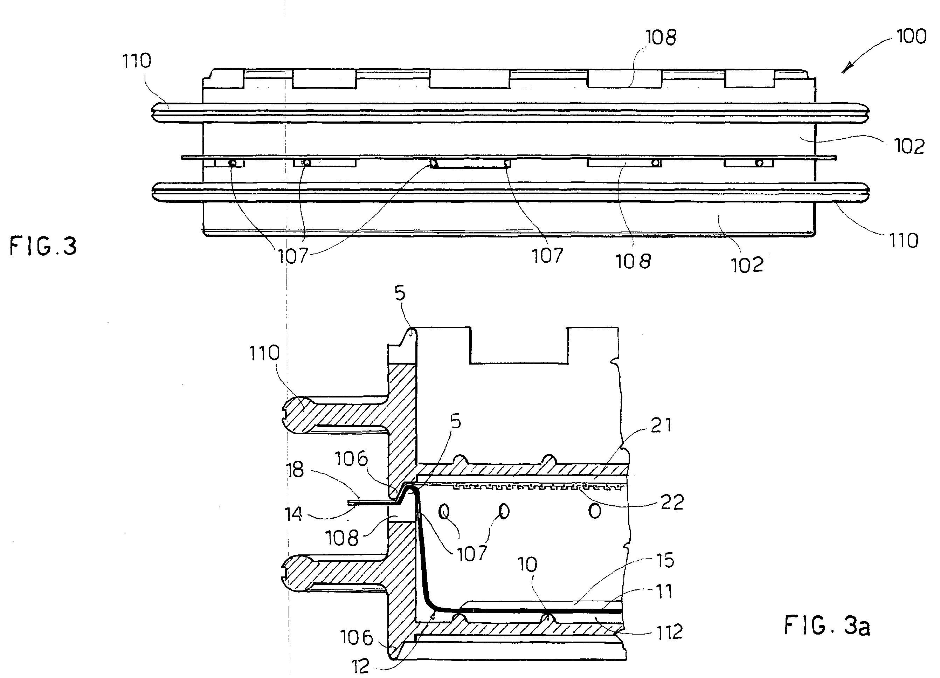

With the aid of Fig. 3 and 3a, a second embodiment of the thermal container for transporting pre-cooked foods is described, in which elements the same as or corresponding to those described in the first embodiment are indicated with the same reference numbers.

In this second embodiment, the elements of which the container is composed have a shape that is particularly suitable for making up an assembly of 100 of containers stacked one on top of the other.

In this embodiment, the lid 3 of the shell of the first embodiment is eliminated. The stack of containers is made up using only elements 102 which act as both base and lid, substantially similar to the base elements 2 of the first embodiment. The only difference between the element 102 and the base element 2 of the first embodiment lies in the fact that the element 102 has a bottom perimeter edge 106 which protrudes at the bottom, substantially similar to the perimeter edge 6 of the lid 3 of the first embodiment.

In this way it is possible to stack the elements 102 one on top of the other, keeping between them a plate 12 substantially identical to the one used in the first embodiment. Clearly the last element 102 on top of the stack, which remains uncovered cannot contain the plate 12. If necessary, an element for covering the stack of containers may be provided.

In this case, for the evacuation of vapours, in the peripheral wall of the plate 12 there are holes 107 while corresponding slots 108 are provided in the upper perimeter edge of the element 102.

The angular distance between these holes 107 and the slots 108 is such that, in any angular position of the plate, at least some of the holes 107 are always aligned with the slots 108.

Unlike the first embodiment, each element 102 may have a continuous or discontinuous perimeter flap 110, projecting outside to facilitate transport of the container or of the stack of containers and separation of the various elements 102 from each other.

## Claims

1. Thermal container for the transport of pre-cooked foods comprising a shell or actual container (1), composed of a base (2; 102) and a lid (3; 102), both thermally insulating and provided with abutment means (5, 6; 5, 106) for self-centring the lid on the base, characterized in that it also includes a plate (12) for holding said pre-cooked foods, removably positioned between said base (2; 102) and said lid (3; 102).

2. Container according to claim 1, charcterized in that said base (2) and said lid (3) of the shell (1) are structurally different from each other.

3. Container according to claim 1, characterized in that said base (102) and said lid (102) of the shell (1) are structurally identical to one another.

4. Container according to claim 1, characterized in that said plate (12) comprises a base (11) and a lid (16).

5. Container according to any of the previous claims, characterized in that said plate (12) has at least one perimeter edge (13, 17) which fits between said abutment means (5, 6; 5, 106) of the base (2; 102) and of the lid (3; 102) of the shell (1) to ensure perfect closing of the container.

6. Container according to claim 5, characterized in that said perimeter edge (13, 17) of the plate (12) extends with a corresponding flap (14, 18) which projects outside said shell (1) to facilitate removal of said plate (12).

7. Container according to any of the previous claims, characterized in that said plate (12) is made of disposable material.

8. Container according to any of the previous claims, characterized in that on the internal surface of said base (2; 102) of the shell (1) there are ribs or ridges (19) on which said plate (12) rests so as to create an area of separation to minimise heat loss.

9. Container according to any of the claims from 4 to 8, characterized in that on the internal surface of said base (11) of the plate (12) there are ribs or ridges (15) on which the food rests so as to create an area of separation which allows a ventilating effect on the vapours generated by the food.

10. Container according to any of the claims from 4 to 9, characterized in that on the internal surface of said lid (16) of the plate there are grooves (22) for minimising the formation of condensate.

11. Container according to claim 2 and to any of the claims from 4 to 10, characterized in that in said lid (16) of the plate (12) and in said lid (3) of the shell (1) there are respective holes or slots (19, 20) for discharging vapours.

12. Container according to claim 2 and to any of the claims from 4 to 11, characterized in that on the internal surface of said lid (3) of the shell (1) there are grooves (23) for minimising the formation of condensate.

13. Container according to claim 2 and to any of the claims from 4 to 12, characterized in that on the extrados of the lid (3) and of the base (2) of the shell there are reciprocal engagement means (24, 25) to allow stacking of several containers.

14. Container according to any of the claims from 3 to 10, characterized in that on the side of the base (11) of said plate (12) there are holes (107) and corresponding slots (108) in the upper perimeter edge (5) of the base (102) of said shell (1) to allow the escape of vapour.

15. Plate (12) for holding pre-cooked foods, to be removably positioned between the base (2; 102) and the lid (3; 102) of a thermal container for the transport of said foods according to any of the previous claims, characterized in that this plate (12) has at least one perimeter edge (13, 17) which fits between the abutment means (5, 6; 5, 106) of the base (2; 102) and of the lid (3; 102) of the container and which extends with a corresponding flap (14, 18) which projects outside the container to facilitate removal of the plate (12).

16. Assembly of thermal containers for the transport of pre-cooked foods, stacked vertically, including a plurality of base elements (2; 102) and lid elements (3; 102) of shells (1) with plates (12) removably positioned between them for holding said pre-cooked foods, according to any of the previous claims.
